(19) Europäisches Patentamt / European Patent Office / Office européen des brevets

(11) EP 3 523 365 B1

(12) **EUROPEAN PATENT SPECIFICATION**

(45) Date of publication and mention of the grant of the patent:
**07.04.2021 Bulletin 2021/14**

(21) Application number: **17786862.7**

(22) Date of filing: **05.10.2017**

(51) Int Cl.:
***C08J 9/26*** *(2006.01)* ***C08K 5/098*** *(2006.01)*
***C08K 5/42*** *(2006.01)* ***H01M 2/14*** *(2006.01)*
***B01D 67/00*** *(2006.01)*

(86) International application number:
**PCT/EP2017/075370**

(87) International publication number:
**WO 2018/065526 (12.04.2018 Gazette 2018/15)**

(54) **POROUS ARTICLE COMPRISING A POLYMER AND AN ADDITIVE, PROCESSES FOR THEIR PREPARATION AND USE THEREOF**

PORÖSER ARTIKEL MIT EINEM POLYMER UND EINEM ADDITIV, VERFAHREN ZU DESSEN HERSTELLUNG UND VERWENDUNG DAVON

ARTICLE POREUX COMPRENANT UN POLYMÈRE ET UN ADDITIF, LEURS PROCÉDÉS DE PRÉPARATION ET D' UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2016 US 201662404934 P**
**30.01.2017 EP 17153832**

(43) Date of publication of application:
**14.08.2019 Bulletin 2019/33**

(73) Proprietor: **Solvay Specialty Polymers USA, LLC**
**Alpharetta, Georgia 30005-3914 (US)**

(72) Inventors:
- **ROLLER, David B.**
**Norcross**
**Georgia 30093 (US)**
- **BRANHAM, Kelly D.**
**Woodstock**
**Georgia 30188 (US)**
- **DI NICOLO', Emanuele**
**21055 Gorla Minore (VA) (IT)**
- **CAMPANELLI, Pasquale**
**20812 Limbiate (MB) (IT)**
- **JEOL, Stéphane**
**Cumming**
**Georgia 30041 (US)**

(74) Representative: **Fiorucci, Hélène**
**Solvay S.A.**
**Rue de Ransbeek, 310**
**1120 Bruxelles (BE)**

(56) References cited:
**EP-A1- 1 746 125** **GB-A- 980 229**
**US-A- 3 852 224** **US-A- 3 956 020**
**US-A- 4 196 070** **US-A1- 2007 232 502**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 523 365 B1

## Description

### FIELD OF THE INVENTION

The present invention relates to polymer compositions for the preparation of porous article, notably microporous membranes. More particularly, the present invention relates to a process of preparing a porous article from a blend of at least one semi-crystalline or amorphous polymer with an additive followed by a step of shaping the article and contacting the article with water to dissolve the additive and create an interconnected pore network within the shaped article.

### BACKGROUND

Porous polymeric membranes are used in a wide variety of applications. They can be prepared using different processes.

The phase inversion methods are currently the most commonly used ones. Phase inversion refers to a process of membrane formation where polymer solutions become set in a semi-solid gel phase by precipitation. In the Non-Solvent Induced Phase Separation (NIPS) process, a homogeneous polymeric solution (also referred to as "dope solution") containing a polymer, a suitable solvent and/or a co-solvent is typically processed by casting into a film and then brought to precipitation by contacting it with a non-solvent medium. In the Thermal Induced Phase Separation (TIPS) process, precipitation is obtained by decreasing the temperature of the polymeric solution. These methods use solvents, such as N-Methyl-2-pyrrolidone (NMP), N,N-dimethyl formamide (DMF), diethyl phthalate (DEP), dibutyl phthalate (DBP) or dioctyl phthalate (DOP). The use of solvents generates substantial environmental and disposal problems. There have been many active research efforts to replace the use of solvents with environmentally friendly alternatives.

Another method known as the template-leaching technique can be used to prepare porous membranes from polymers which do not dissolve in common organic solvents. In this technique, a homogeneous film is prepared from a mixture of membrane matrix material and a leachable component. The leachable component can be a soluble low molecular weight substance or even a macromolecular material such as poly(vinyl alcohol) (PVA) or poly(ethylene glycol) (PEG). After the film has been prepared, the leachable component is removed by a suitable chemical treatment, and a porous structure is formed as a result. One drawback of this method is the low thermal stability of PEG and PVA that degrades at temperatures above 300°C.

US 5,064,580 discloses a method for preparing a microporous membrane from poly(ether ether ketone) (PEEK) polymers and a plasticizer, which is capable of dissolving at least a portion of the PEEK polymer at the extrusion or casting temperature. The method comprises a step consisting in leaching the membranes to remove at least a portion of the plasticizer.

US 6,887,408 discloses a process for the preparation of porous articles of PAEK. The process comprises forming the PEEK/PEI blend, forming the shaped article from the blend by extrusion, molding or casting, decomposing the PEI into low molecular weight fragments in the shaped article by chemical treatment, and removing the low molecular weight fragments from the article. Chemical reagents that removed the PEI fragments include for example ammonia, hydrazine, N-Methyl-2-pyrrolidone (NMP), N,N-dimethyl formamide (DMF), and the like.

GB 920,229 relates to the production of microporous olefinic polymers (mainly polyethylene and polypropylene polymers) using a water-soluble anionic surfactant.

EP1746125 (NTN Corp) relates to a resinous porous article and a method of producing this article. The article has interconnected holes. The interconnected holes are formed by molding a resin containing a pore-forming substance into a molding, and extracting the pore-forming substance from the molding with a solvent which does not dissolve the resin and dissolves the pore-forming substance. The pore-forming substance is an alkali compound and can be selected from among sodium benzoate, sodium acetate, sodium sebacate, sodium triphosphate, sodium pyrophosphate, and potassium carbonate.

US4196070 (Nuclepore Corp) relates to a microporous sheet formed of fluorocarbon polymer, preferably PTFE. An aqueous dispersion of the polymer particles is mixed with a water soluble, crystallizable metallic organic salt, preferably sodium benzoate, and formed into a sheet. See column 3, lines 24-28. The sheet is dried to form crystals of the salt dispersed throughout the sheet. Then, it is sintered to fuse the polymer particles and cooled. Thereafter, the salt crystals are leached out by dissolution in water. Microporous sheets formed by this method have small pores of generally dendritic configuration interlaced in a void space network of intersecting shafts with the sheet forming the negative image of such pores. The overall structure is sponge-like having an interconnecting porous network.

According to example 11 of US2007232502 (NTN Corp), a powder of polyamide (nylon 6) resin and the powder of the sodium benzoate were mixed with each other at a volume ratio of 50:50 for five minutes by using the mixer to obtain mixed powder. The obtained mixed powder was molded into a resinous cylinder having an inner diameter of 8 mm x an outer diameter of 8.7 mm x a height of 3 mm. The molding was cleaned with hot water having a temperature of 80 °C by using the ultrasonic cleaner for 10 hours to elute the sodium benzoate. Thereafter the molding was dried at

100 °C for eight hours to obtain a cylinder made of a resinous porous article having an interconnected hole porosity of 49%.

US3956020 (GE) relates to a method of making an ultrafine, porous polymer article having a porosity of 40 % and greater. According to this document, a soluble salt (e.g., soluble in water, alcohol, or other such organic liquids) is incorporated uniformly within a resin, and the salt is dissolved from the polymer body resulting in a polymer article with an ultrafine porous structure. Such salts include sodium benzoate, lithium benzoate, potassium benzoate, sodium benzoate and calcium benzoate, sodium p-t-bytyl benzoate and sodium p-chloro benzoate.

US 3 852 224 A (Tee-Pak Inc) and GB 980 229 A (GE) disclose the use of surfactants which can be sulfonates. GB 980 229 A does not described the preparation of articles made of high performance polymers, as it is the case in the present invention. US 3 852 224 A generally describes that the polymers useful for preparing the microporous polymer system can be any of the natural, thermoset and thermoplastic polymers or polymer precursors dispersible in a liquid vehicle under conditions for surfactant micellization. The microporous film of US 3 852 224 A are described as useful as binders for ion exchange resins, battery separators, a filter medium for the removal of bacteria, and cellulose films as casings for edible wieners and sausages.

There is still a need to provide porous articles, made of amorphous or semi-crystalline polymers, prepared by an environmentally friendly process, which does not use solvents such as NMP or DMF, or does not involve any radiation source. Another object of the present invention is to provide a simple and cost-effective process for preparing these porous articles.

## SUMMARY OF THE INVENTION

An object of the present invention is to provide a polymer composition (C) suitable to prepare a porous polymer article, for example a membrane or hollow fibers.

According to one embodiment, the article is made of a semi-crystalline polymer, for example a poly(ether ether ketone) (PEEK) or a poly(phenylene sulfide) (PPS), presenting valuable thermal properties, mechanical properties (i.e . stiffness to prevent pore collapse), chemical resistance and known to be insoluble in most common solvents.

Another object of the present invention is to provide a simple and cost-effective process for the preparation of these porous articles, the process not using solvents such as NMP or DMF or not involving an irradiation source.

According to one embodiment of the invention, this process comprises a step consisting in processing or shaping the polymer composition into an article, for example by extrusion, and a step consisting in contacting the article with water so as to dissolve one of the polymer composition components, herein called "additive", thereby creating a pore network within the shaped article. The inventors have surprisingly found that certain additives, which are water-soluble, can be compounded homogeneously in various polymer compositions, notably semi-crystalline polymer compositions, withstanding harsh conditions that is to say notably not degrading at high temperatures (for example the ones used in the compounding). The homogeneous repartition of the additive within the polymer composition, along with an adjusted quantity of the same within the composition, offer the possibility to create an interconnected pore network into the shaped article by a step consisting in dissolution into water.

According to the invention, the polymer compositions (C) of the present invention comprise at least 28 wt. %, based on the total weight of the polymer composition (C), of the additive.

## DETAILED DESCRIPTION OF PREFERRED EMBODIMENTS

The present invention relates to a polymer composition (C) comprising at least one polymer (P), which can be semi-crystalline or amorphous, and at least 28 wt. %, by weight of the polymer composition, of at least one additive. This composition is used to prepare porous articles, for example microporous membranes or hollow fibers, to be used in a wide application spectrum covering filtration in general (microfiltration and ultrafiltration), food and dairy industries, wastewater treatment, hemodialysis, battery separators and reverse osmosis pretreatment. More precisely, a homogenous article (e.g. a film or a membrane) is prepared from the mixture of the semi-crystalline and/or amorphous polymer and the additive. After the shaped article (e.g. a film or a membrane) has been prepared, the additive, which is water-soluble by nature, is removed from the shaped article by immersion into water. A porous structure presenting an interconnected pore network is formed as a result (e.g. a porous film or a porous membrane). The shaped porous articles obtained with these components, according to this process, have been shown not only to present a high porosity but also good mechanical properties and chemical resistance.

For the sake of clarity, throughout the present application :

- "melting temperature (Tm)" or "Tm" or "melting point" means the melting temperature measured by differential scanning calorimetry (DSC) according to ASTM D3418 at 20°C/min as described in details in the examples;
- the term "halogen" includes fluorine, chlorine, bromine, and iodine, unless indicated otherwise;
- the adjective "aromatic" denotes any mono- or polynuclear cyclic group (or moiety) having a number of $\pi$ electrons

equal to 4n+2, where n is 1 or any positive integer; an aromatic group (or moiety) can be an aryl and arylene group (or moiety).

The composition, articles and porous articles of this invention comprise at least one semi-crystalline or amorphous polymer.

According to the invention, the polymer (P), which can be amorphous or semi-crystalline, is selected from the group consisting of a poly(aryl ether ketone) (PAEK), a poly(aryl ether sulfone) (PAES), a polyarylene sulfide (PAS), a polyetherimide (PEI), a poly(phenyl ether) (PPE), a polyphenylene (PP) and a polyamideimide (PAI).

When the polymer is a PEAK, it is preferably a poly(ether ether ketone) (PEEK), a poly(ether ketone ketone) (PEKK), a poly(ether ketone) (PEK) or a copolymer of PEEK and poly(diphenyl ether ketone) (PEEK-PEDEK copolymer).

When the polymer is a PAES, it is preferably a polyphenylsulfone (PPSU), a polyethersulfone (PES) or a polysulfone (PSU).

When the polymer is a PAS, it is preferably a poly(*para*-phenylene sulfide) (PPS).

Generally, the polymers in the polymer composition may have a weight average molecular weight (Mw) ranging from 10,000 g/mol to 150,000 g/mol, preferably from 20,000 g/mol to 100,000 g/mol or from 40,000 to 95,000 g/mol. The weight average molecular weight can be determined by gel permeation chromatography using ASTM D5296 with polystyrene standards.

In some embodiments, the polymer composition includes one, two, three, four, or more different polymers selected from those described herein.

***Poly(aryl ether ketone)s (PAEK)***

As used herein, a poly(aryl ether ketone) (PAEK) denotes any polymer comprising more than 50 mol. % of recurring units ($R_{PAEK}$) comprising a Ar'-C(=O)-Ar* group, where Ar' and Ar*, equal to or different from each other, are aromatic groups. The recurring units ($R_{PAEK}$) may be selected from the group consisting of units of formulae (J-A) to (J-D) below:

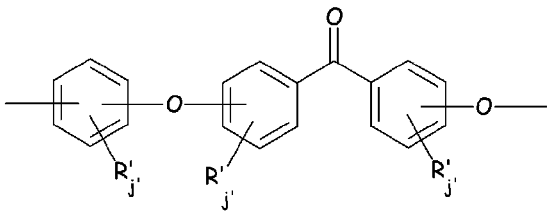
(J-A)

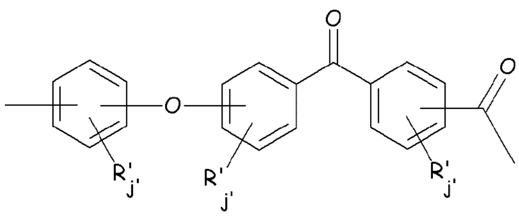
(J-B)

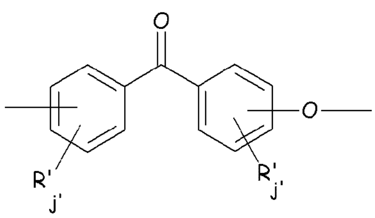
(J-C)

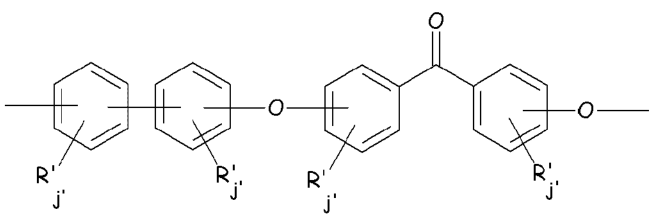
(J-D)

where

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j' is zero or an integer ranging from 1 to 4.

In recurring unit ($R_{PAEK}$), the respective phenylene moieties may independently have 1,2-, 1,4- or 1,3-linkages to the other moieties different from R' in the recurring unit ($R_{PAEK}$). Preferably, the phenylene moieties have 1,3- or 1,4-linkages, more preferably they have a 1,4-linkage.

In recurring units ($R_{PAEK}$), j' is preferably at each occurrence zero so that the phenylene moieties have no other substituents than those linking the main chain of the polymer.

In some embodiments, the PAEK is poly(ether ether ketone) (PEEK). As used herein, a poly(ether ether ketone) (PEEK) denotes any polymer comprising more than 50 mol. % of recurring units ($R_{PAEK}$) of formula (J'-A) :

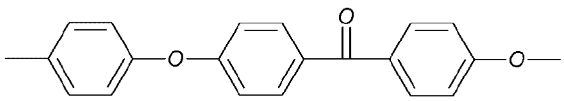

(J'-A)

Preferably at least 60 mol. %, 70 mol. %, 80 mol. %, 90 mol. %, 95 mol. %, 99 mol. %, and most preferably all of recurring units ($R_{PAEK}$) are recurring units (J'-A).

In another preferred embodiment, the PAEK is poly(ether ketone ketone) (PEKK). As used herein, a poly(ether ketone ketone) (PEKK) denotes any polymer comprising more than 50 mol. % of recurring units ($R_{PAEK}$) of formula (J'-B) and formula (J"-B):

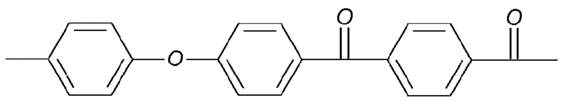

(J'-B)

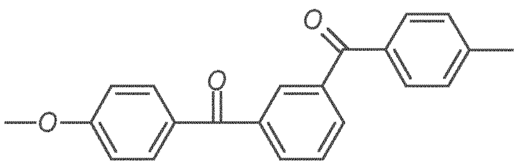

(J''-B)

Preferably at least 60 mol. %, 70 mol. %, 80 mol. %, 90 mol. %, 95 mol. %, 99 mol. %, and most preferably all of recurring units ($R_{PAEK}$) are a combination of recurring units (J'-B) and (J"-B).

In yet another preferred embodiment, the PAEK is poly(ether ketone) (PEK). As used herein, a poly(ether ketone) (PEK) denotes any polymer comprising more than 50 mol. % of recurring units ($R_{PAEK}$) of formula (J'-C) :

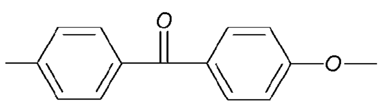

(J'-C)

Preferably at least 60 mol. %, 70 mol. %, 80 mol. %, 90 mol. %, 95 mol. %, 99 mol. %, and most preferably all of recurring units ($R_{PAEK}$) are recurring units (J'-C).

In some embodiments, the PAEK is a PEEK-PEDEK copolymer. As used herein, a PEEK-PEDEK copolymer denotes any polymer comprising more than 50 mol. % of recurring units ($R_{PAEK}$) of formula (J'-A) (PEEK recurring unit) and formula (J'-D) (poly(diphenyl ether ketone)(PEDEK) recurring unit) :

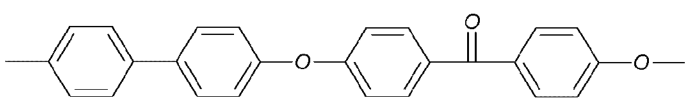

(J'-D)

The PEEK-PEDEK copolymer may include relative molar proportions of recurring units (J'-A) and (J'-D) (PEEK/PEDEK) ranging from 95/5 to 60/40. Preferably the sum of recurring units (J'-A) and (J'-D) represents at least 60 mol. %, 70 mol. %, 80 mol. %, 90 mol. %, 95 mol. %, 99 mol. %, of recurring units in the PAEK. In some aspects, recurring units (J'-A) and (J'-D) represent all of the recurring units in the PAEK.

Most preferably, the PAEK is PEEK or PEEK-PEDEK. KETASPIRE® PEEK is commercially available from Solvay Specialty Polymers USA, LLC. Excellent results were obtained when the polymer used to prepare porous membrane was PEEK or PEEK-PEDEK.

***Poly(aryl ether sulfone)s (PAES)***

For the purpose of the present invention, a poly(aryl ether sulfone) (PAES) denotes any polymer comprising at least 50 mol. % of recurring units ($R_{PAES}$) of formula (K) :

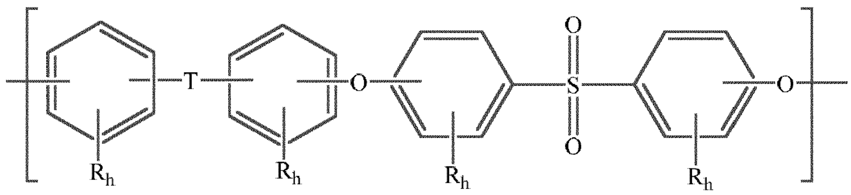

(K)

where

(i) each R, equal to or different from each other, is selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;

(ii) each h, equal to or different from each other, is an integer ranging from 0 to 4; and

(iii) T is selected from the group consisting of a bond, a sulfone group [$-S(=O)_2-$], and a group $-C(R_j)(R_k)-$, where $R_j$ and $R_k$, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium. $R_j$ and $R_k$ are preferably methyl groups.

Preferably at least 60 mol. %, 70 mol. %, 80 mol. %, 90 mol. %, 95 mol. %, 99 mol. %, and most preferably all of recurring units in the PAES are recurring units ($R_{PAES}$).

In one embodiment, the PAES is a polyphenylsulfone (PPSU). As used herein, a polyphenylsulfone (PPSU) denotes any polymer comprising more than 50 mol. % of recurring units of formula (K'-A):

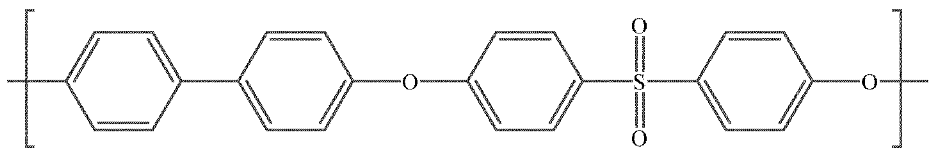

(K'-A).

Preferably at least 60 mol. %, 70 mol. %, 80 mol. %, 90 mol. %, 95 mol. %, 99 mol. %, and most preferably all of the recurring units in the PPSU are recurring units of formula (K'-A).

PPSU can be prepared by known methods and is notably available as RADEL® PPSU from Solvay Specialty Polymers USA, L.L.C.

In some embodiments, the PAES is a polyethersulfone (PES). As used herein, a polyethersulfone (PES) denotes any polymer comprising at least 50 mol. % of recurring units of formula (K'-B):

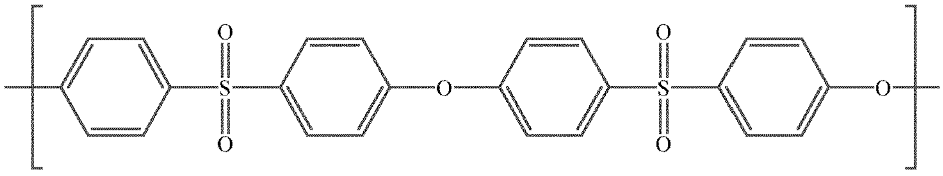

(K'-B).

Preferably at least 60 mol. %, 70 mol. %, 80 mol. %, 90 mol. %, 95 mol. %, 99 mol. %, and most preferably all of the recurring units in the PES are recurring units of formula (K'-B).

PES can be prepared by known methods and is notably available as VERADEL® PESU from Solvay Specialty Polymers USA, L.L.C.

In some embodiments, the PAES is a polysulfone (PSU). As used herein, a polysulfone (PSU) denotes any polymer comprising at least 50 mol. % of recurring units of formula (K'-C):

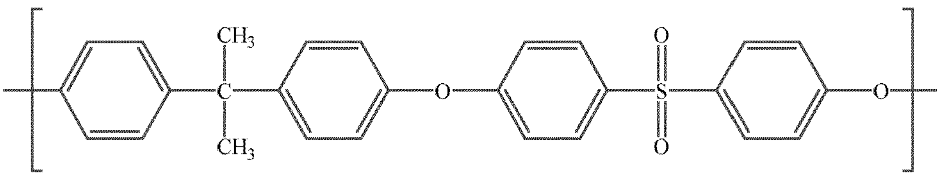

(K'-C).

Preferably at least 60 mol. %, 70 mol. %, 80 mol. %, 90 mol. %, 95 mol. %, 99 mol. %, and most preferably all of the recurring units in the PSU are recurring units of formula (K'-C).

PSU can be prepared by known methods and is available as UDEL® PSU from Solvay Specialty Polymers USA, L.L.C.

***Polyarylene Sulfide (PAS)***

For the purpose of the present invention, the expression "polyarylene sulfide (PAS)" is intended to denote any polymer comprising more than 50 mol. % of recurring units ($R_{PAS}$) of formula -(Ar'-S)-, where Ar' is an aromatic group.

Preferably at least 60 mol. %, 70 mol. %, 80 mol. %, 90 mol. %, 95 mol. %, 99 mol. %, and most preferably all of the recurring units in the PAS are recurring units ($R_{PAS}$).

Nonlimiting examples of PAS include poly(2,4-toluene sulfide), poly(4,4'-biphenylene sulfide), poly(*para*-phenylene sulfide) (PPS), poly(*ortho*-phenylene sulfide), poly(*meta*-phenylene sulfide), poly(xylene sulfide), poly(ethylisopropylphenylene sulfide), poly(tetramethylphenylene sulfide), poly(butylcyclohexylphenylene sulfide), poly(hexyldodecylphenylene sulfide), poly(octadecylphenylene sulfide), poly(phenylphenylene sulfide), poly-(tolylphenylene sulfide), poly(benzylphenylene sulfide), poly[octyl-4-(3-methylcyclopentyl)phenylene sulfide], and any combination thereof.

Preferably, the PAS is poly(*para*-phenylene sulfide) (PPS). As used herein, a poly(*para*-phenylene sulfide) (PPS) denotes any polymer comprising at least 50 mol. % of recurring units ($R_{PPS}$) of formula (L) :

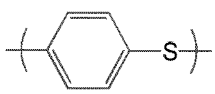

(L).

Preferably at least 60 mol. %, 70 mol. %, 80 mol. %, 90 mol. %, 95 mol. %, 99 mol. %, and most preferably all of the recurring units in the PPS are recurring units ($R_{PPS}$).

PPS is manufactured and sold under the trade name Ryton® PPS by Solvay Specialty Polymers USA, LLC. Excellent results were obtained when the polymer used to prepare porous membrane was PPS.

***Polyetherimide (PEI)***

For the purpose of the present invention, a polyetherimide (PEI) denotes any polymer comprising more than 50 mol. % of recurring units ($R_{PEI}$) comprising at least one aromatic ring, at least one imide group, as such and/or in its amic acid form, and at least one ether group. Preferably at least 60 mol. %, 70 mol. %, 80 mol. %, 90 mol. %, 95 mol. %, 99 mol. %, and most preferably all of recurring units of the PEI are recurring units ($R_{PEI}$).

Recurring units ($R_{PEI}$) may optionally further comprise at least one amide group which is not included in the amic acid form of an imide group.

The recurring units ($R_{PEI}$) are advantageously selected from the group consisting of following formulae (M), (N), (O), (P) and (Q), and mixtures thereof:

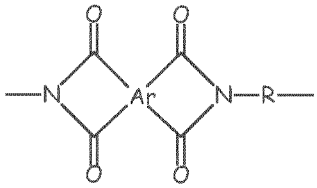
formula (M)

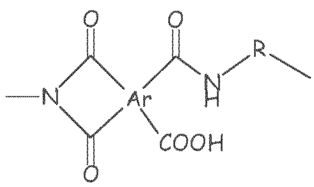
formula (N)

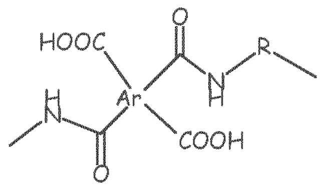
formula (O);

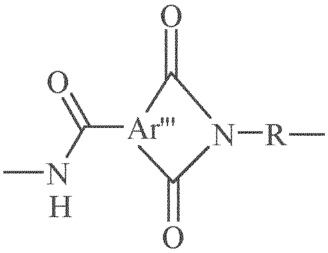
formula (P)

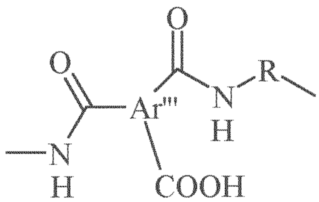
formula (Q)

where in formulae (M)-(Q) :

Ar are tetravalent aromatic moieties and Ar'" are trivalent aromatic moieties independently selected from the group consisting of a substituted or unsubstituted, saturated, unsaturated or aromatic monocyclic and polycyclic group having 5 to 50 carbon atoms; and

R is a divalent radical of the general formula (S) :

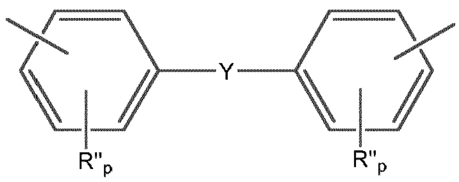
(S)

where (i) Y is selected from the group consisting of alkylenes of 1 to 6 carbon atoms, in particular $-C(CH_3)_2$; (ii) R" is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and (iii) p is independently 0, 1, 2, 3 or 4; provided that at least one of Ar, Ar'" and R comprise at least one ether group wherein the ether group is present in the polymer chain backbone.

In a preferred embodiment, at least 50 mol. % of the recurring units ($R_{PEI}$) are recurring units selected from the group consisting of those of formula (T) in imide form, their corresponding amic acid forms of formulae (T'-A) and (T'-B), and mixtures thereof:

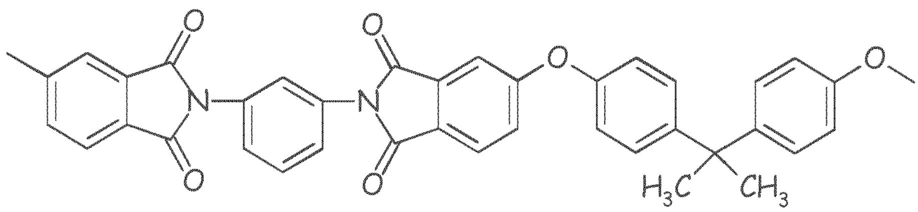
(T)

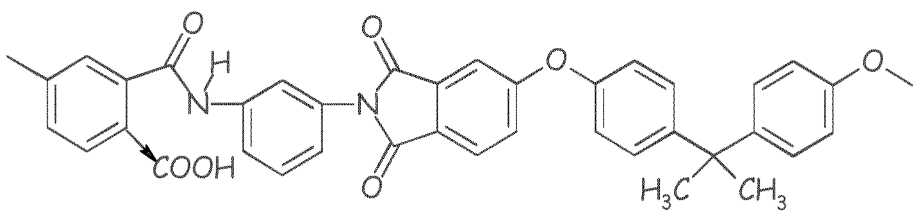

(T'-A)

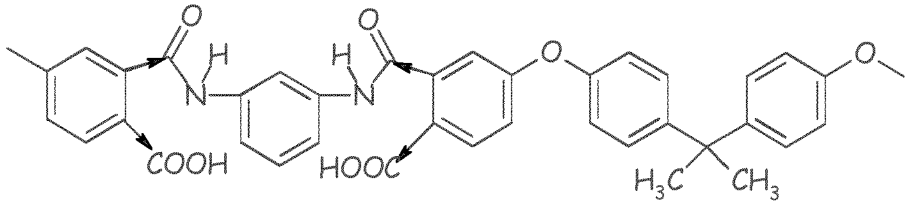

(T'-B)

where in formulae (T'-A) and (T'-B) the "→" denotes isomerism so that in any recurring unit the groups to which the arrows point may exist as shown or in an interchanged position.

In a another preferred embodiment, at least 50 mol. % of the recurring units ($R_{PEI}$) are recurring units selected from the group consisting of those of formula (U) in imide form, their corresponding amic acid forms of formulae (U'-A) and (U'-B), and mixtures thereof:

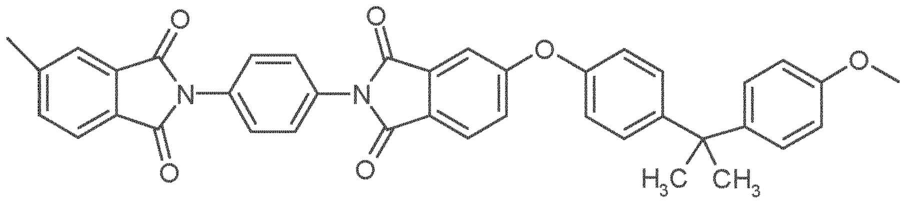

(U)

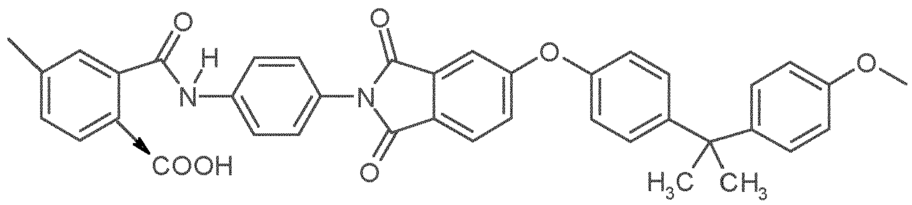

(U'-A)

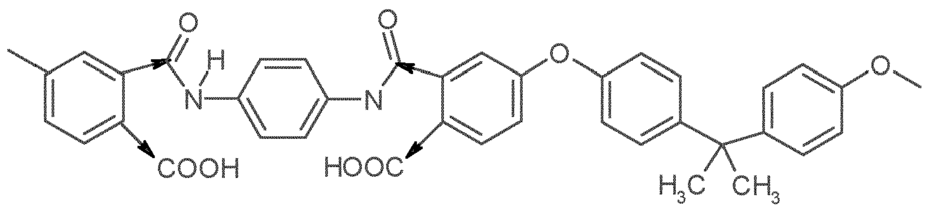

(U'-B)

wherein in formulae (U'-A) and (U'-B) the "→" denotes isomerism so that in any recurring unit the groups to which the arrows point may exist as shown or in an interchanged position.

Preferably at least 60 mol. %, 70 mol. %, 80 mol. %, 90 mol. %, 95 mol. %, 99 mol. %, and most preferably all of recurring units ($R_{PEI}$) are selected from the group consisting of those of formulae (T), (T'-A), (T'-B), and mixtures thereof or (U), (U'-A), (U'-B), and mixtures thereof.

***Poly(phenyl ether)(PPE)***

For the purpose of the present invention, a poly(phenyl ether) (PPE denotes a polymer comprising more than 50 mol. % of recurring units ($R_{PPE}$) of formula (W) :

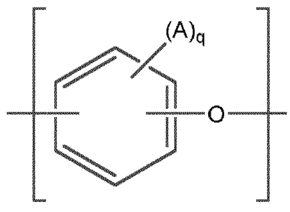

(W)

where

(i) A are independently selected from a C1- C30 alkyl groups, and
(ii) q is 0, 1, 2, 3 or 4.

Preferably at least 60 mol. %, 70 mol. %, 80 mol. %, 90 mol. %, 95 mol. %, 99 mol. %, and most preferably all recurring units in the PPE are recurring units (RPPE).
Preferably, A represents $CH_3$ and q is 2.
Preferably the phenylene moieties in the PPE have 1,4-linkages.

***Polyamideimide (PAI)***

As used herein, a polyamideimide or aromatic polyamide-imide polymer (PAI) has at least 50 mol. % of recurring units ($R_{PAI}$) comprising at least one aromatic ring, at least one imide group, as such and/or in its amic acid form, and at least one amide group which is not included in the amic acid form of an imide group.
The recurring units ($R_{PAI}$) are advantageously chosen among those of formula:

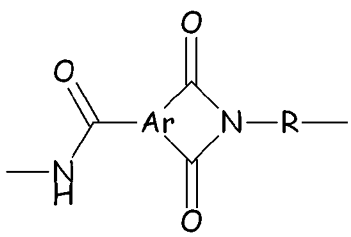

$R_{PAI}$-a
(imide form)

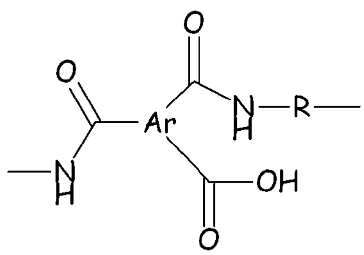

$R_{PAI}$-b
(amic acid form)

wherein :

- Ar is a trivalent aromatic group; typically Ar is selected from the group consisting of following structures :

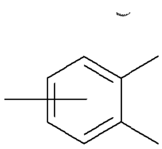

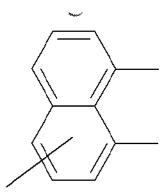

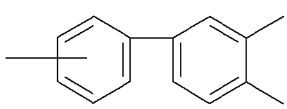

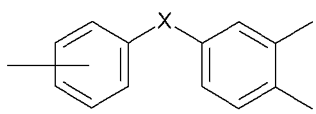

and corresponding optionally substituted structures, with X being -O-, -C(O)-,
- $CH_2$-, -$C(CH_3)_2$-, -$C(CF_3)_2$-, -$(CF_2)_q$-, with q being an integer from 1 to 5 ;

R is a divalent aromatic group; typically R is selected from the group consisting of following structures :

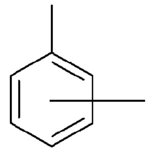 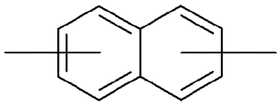 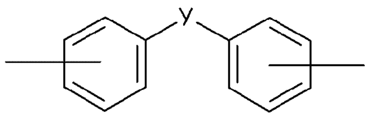

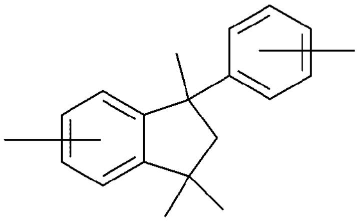 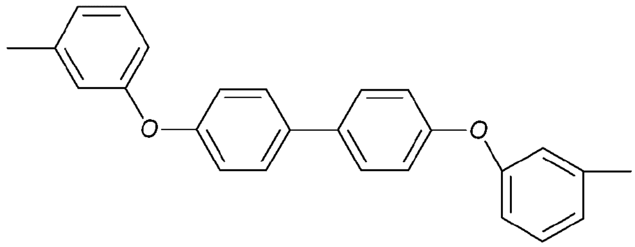

and corresponding optionally substituted structures, with Y being -O-, -S-, $-SO_2-$, $-CH_2-$, -C(O)-, $-C(CH_3)_2-$, $-C(CF_3)_2-$, $-(CF_2)_q$, q being an integer from 1 to 5.

Preferably, the aromatic polyamide-imide comprises more than 50 % of recurring units ($R_{PAI}$) comprising an imide group in which the imide group is present as such, like in recurring units ($R_{PAI}$-a), and/or in its amic acid form, like in recurring units ($R_{PAI}$-b).

Recurring units ($R_{PAI}$) are preferably chosen from recurring units (1), (m) and (n), in their amide-imide (a) or amide-amic acid (b) forms :

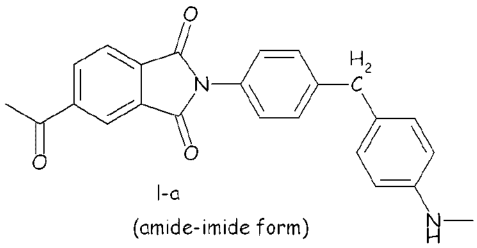

l-a

(amide-imide form)

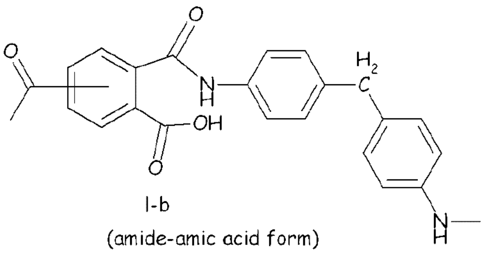

l-b

(amide-amic acid form)

(l)

wherein the attachment of the two amide groups to the aromatic ring as shown in (1-b) will be understood to represent the 1,3 and the 1,4 polyamide-amic acid configurations ;

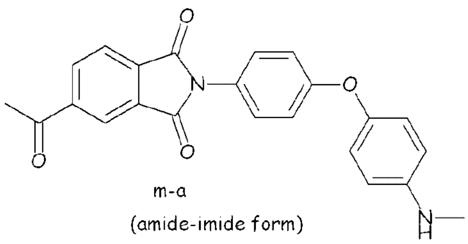

m-a

(amide-imide form)

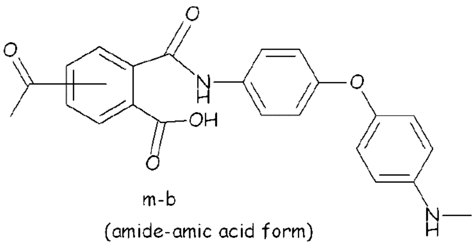

m-b

(amide-amic acid form)

(m)

wherein the attachment of the two amide groups to the aromatic ring as shown in (m-b) will be understood to represent the 1,3 and the 1,4 polyamide-amic acid configurations ; and

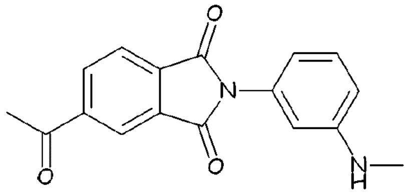

n-a

(amide-imide form)

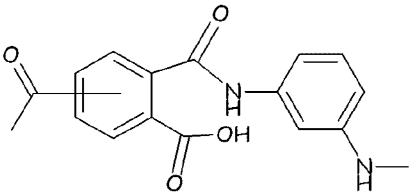

n-b

(amide-amic acid form) (n)

wherein the attachment of the two amide groups to the aromatic ring as shown in (n-b) will be understood to represent the 1,3 and the 1,4 polyamide-amic acid configurations.

More preferably, the polymer (PAI) comprises more than 90 mol. % of recurring units ($R_{PAI}$). Still more preferably, it contains no recurring unit other than recurring units ($R_{PAI}$) Polymers commercialized by Solvay Specialty Polymers USA, L.L.C. as TORLON® polyamide-imides comply with this criterion.

Torlon® 4000T is an aromatic polyamide-imide polymer commercially available from Solvay Specialty Polymers USA, LLC.

***Polyphenylenes (PP)***

As used herein, a polyphenylene polymer denotes any polymer comprising more than 50 mol. % of recurrig units (Rp) of formula (F) :

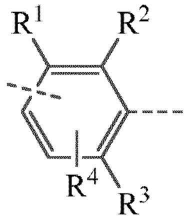

(F)

where

- $R^1$, $R^2$, $R^3$, and $R^4$ are each independently selected from the group consisting of a hydrogen, an alkyl, an aryl, an alkoxy, an aryloxy, an alkylketone, an arylketone, a fluoroalkyl, a fluoroaryl, a bromoalkyl, a bromoaryl, a chloroalkyl, a chloroaryl, an alkylsulfone, an arylsulfone, an alkylamide, an arylamide, an alkylester, an arylester, a fluorine, a chlorine, and a bromine.

In some embodiments, a polyphenylene polymer can have at least about 60 mol. %, at least about 70 mol. %, at least about 80 mol. %, at least about 90 mol. %, at least about 95 mol. %, at least about 99 mol. % or at least about 99.9 mol. % repeat units (Rp).

In some embodiments, one or more of $R^1$, $R^2$, $R^3$, and $R^4$ can be independently represented by formula (F') :

Ar-T-(F')

wherein :

- Ar is represented by a formula selected from the following group of formulae :

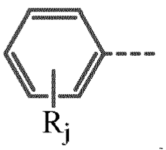

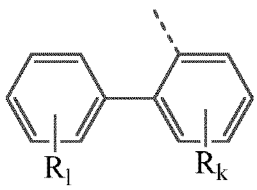

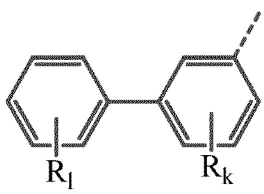

and

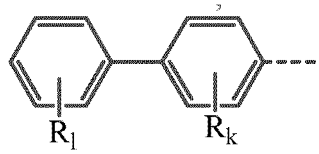

,

- with each $R_j$, $R_k$ and $R_l$ is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and with j and l, equal or different from each other are independently 0, 1, 2, 3, 4, or 5 and, k, equal or different from j or 1, is independently 0, 1, 2, 3 or 4;
- where the dashed lined indicates a bond to T.
- where T is selected from the group consisting of $-CH_2-$; -O-; $-SO_2-$; -S-;
- C(O)-; $-C(CH_3)_2-$, $-C(CF_3)_2-$; $-C(=CCl_2)-$; $-C(CH_3)(CH_2CH_2COOH)-$; -N=N-;
- $R_aC=CR_b-$, where each $R_a$ and $R_b$, independently of one another, is a hydrogen or a C1-C12-alkyl, C1-C12-alkoxy, or C6-C18-aryl group; $-(CH_2)_n-$ and $-(CF_2)_n-$with n being an integer from 1 to 6; an aliphatic divalent group, linear or branched, of up to 6 carbon atoms; and combinations thereof.

In some embodiments, one or more of $R^1$, $R^2$, $R^3$, and $R^4$ can be represented by formula (F") :

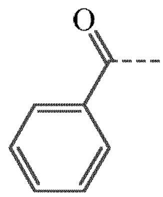

(F'')

where, in formula (F"), the dashed bond indicates the bond to the benzyl moiety of repeat unit (Rp).

Polyphenylene copolymers are commercially available from Solvay Advanced Polymers, L.L.C. as PRIMOSPIRE® PR-120 polyphenylene and PRIMOSPIRE® SRP PR-250 polyphenylene.

### *Fluoropolymer (FP)*

As used herein, a fluoropolymer denotes a polymer comprising recurring units derived from at least one fluorinated monomer, that-is-to-say an ethylenically unsaturated monomer comprising at least one fluorine atom. The fluoropolymer may further comprise at least one hydrogenated monomer, that-is-to-say an ethylenically unsaturated monomer comprising at least one hydrogen atom and free from fluorine atoms. The fluoropolymer may be semi-crystalline or amorphous.

The fluoropolymer (FP) is typically selected from the group consisting of:

(1) polymers (PF-1) comprising recurring units derived from at least one fluorinated monomer selected from tetrafluoroethylene (TFE) and chlorotrifluoroethylene (CTFE), and from at least one hydrogenated monomer selected from ethylene, propylene and isobutylene, optionally containing one or more additional comonomers, typically in amounts of from 0.01 % to 30 % by moles, based on the total amount of TFE and/or CTFE and the hydrogenated monomer(s);
(2) polymers (PF-2) comprising recurring units derived from vinylidene fluoride (VDF), and, optionally, from one or more fluorinated monomers different from VDF;
(3) polymers (PF-3) comprising recurring units derived from tetrafluoroethylene (TFE) and at least one fluorinated monomer different from TFE selected from the group consisting of:

- perfluoroalkylvinylethers of formula $CF_2=CFOR_{f1'}$, wherein $R_{f1'}$ is a $C_1$-$C_6$, perfluoroalkyl group;
- perfluoro-oxyalkylvinylethers of formula $CF_2=CFOX_0$ wherein $X_0$ is a $C_1$-$C_{12}$ perfluorooxyalkyl group comprising one or more ether groups, such as perfluoro-2-propoxy-propyl group;
- $C_3$-$C_8$ perfluoroolefins, such as hexafluoropropene (HFP); and
- perfluorodioxoles of formula :

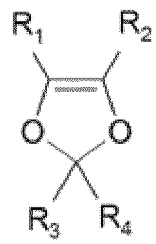

wherein $R_1$, $R_2$, $R_3$ and $R_4$, equal to or different from each other, are independently selected from the group consisting of -F, a $C_1$-$C_6$ fluoroalkyl group, optionally comprising one or more oxygen atoms, and a $C_1$-$C_6$ fluoroalkoxy group, optionally comprising one or more oxygen atoms; and

(4) polymers (PF-4) comprising recurring units derived from at least one cyclopolymerizable monomer of formula :

$$CR_7R_8=CR_9OCR_{10}R_{11}(CR_{12}R_{13})a(O)_bCR_{14}=CR_{15}R_{16},$$

wherein each $R_7$ to $R_{16}$, independently of one another, is selected from -F and a $C_1$-$C_3$ fluoroalkyl group, a is 0 or 1, b is 0 or 1 with the proviso that b is 0 when a is 1.

Preferably, the fluoropolymer is polyvinylidene difluoride (PVDF), polytetrafluoroethylene (PTFE) or perfluoroalkoxy alkanes (PFA).
Fluoropolymers are commercially available from Solvay Specialty Polymers Italy S.p.A under the trademark name HYFLON® PFA P and M series, HYFLON® MFA and HYFLO® AD.

***Additive***

The polymer composition (C) of the present invention also comprises an additive of formula (I) :

$$R_a - Ar - X_b \quad (I)$$

where

- Ar is an aromatic moiety and is selected from the group consisting of substituted or unsubstituted, aromatic monocyclic or polycyclic group having 5 to 18 carbon atoms,
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5, preferably a is zero or 1;
- X is $(SO_3^-)$, $(M^{p+})_{1/p}$ or $(COO^-)$, $(M^{p+})_{1/p}$ in which $M^{p+}$ is a metal cation of p valence;
- b is an integer ranging from 1 to 4, preferably b is 1 or 2.

One of the essential features of the present invention is to use an additive in the form of a salt of sulfonic acid or carboxylic acid, more precisely a sulfonate-$SO_3^-$ and/or a carboxylate -$COO^-$. The additive may comprise 1 to 4 groups X, identical or different, where X is $(SO_3^-)$, $(M^{p+})_{1/p}$ or $(COO^-)$, $(M^{p+})_{1/p}$ in which $M^{p+}$ is a metal cation of p valence.
According to an embodiment, the additive of formula (I) is such that each of R, identical or different from each other, is selected from the group consisting of a halogen, an hydroxyl and a C1-C3 aliphatic group (i.e. a methyl, an ethyl or a propyl).
According to an embodiment, M is selected from the group consisting of sodium, potassium, calcium, lithium, magnesium, silver, aluminium, zinc, nickel, copper, palladium, iron, and cesium. Preferably M is sodium or potassium.
M can alternatively be specifically chosen among alkali metals (IA of the periodic table) or alkaline earths metal (IIA of the periodic table).
According to an embodiment, X is a sodium and/or a potassium salt of sulfonic acid and/or carboxylic acid.
The additive used in the present invention is by nature water-soluble.
The additive may also be said to be extractable, as defined below.
According to one embodiment of the invention, the aromatic moiety of formula (I) can be selected from the group consisting of :

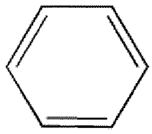

(Ar-A)

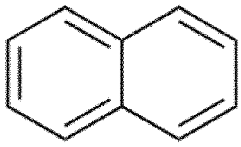

(Ar-B)

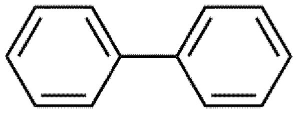

(Ar-C)

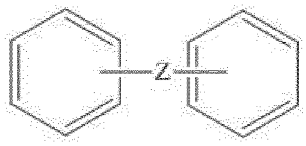

(Ar-D)

wherein Z is a divalent moiety and is selected from the group consisting of $-SO_2-$, -CO- and alkylenes of 1 to 6 carbon atoms. Z can in particular be a $-C(CH_3)_2-$ or $-C_nH_{2n}-$ with n being an integer from 1 to 6, for example $-CH_2-$ or $-CH_2-CH_2-$.

According to one embodiment of the invention, the additive of formula (I) is such that each aromatic moiety of formula (I), for example (Ar-A) to (Ar-D) comprises 1,2 or 3 groups X, identical or different, where X is $(SO_3^-)$, $(M^{p+})_{1/p}$ or $(COO^-)$, $(M^{p+})_{1/p}$ in which $M^{p+}$ is a metal cation of p valence.

According to one embodiment of the invention, the additive of formula (I) is such that each aromatic moiety of formula (I) comprises 1 or 2 groups X, identical or different, where X is $(SO_3^-)$ , $(M^{p+})_{1/p}$ or $(COO^-)$, $(M^{p+})_{1/p}$ in which $M^{p+}$ is a metal cation of p valence.

According to one embodiment, the additive is according to formula (II) :

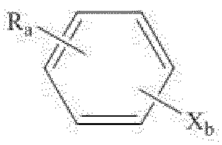

(II)

wherein :

- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is $(SO_3^-)$, $(M^{p+})_{1/p}$ or $(COO^-)$, $(M^{p+})_{1/P}$ in which $M^{p+}$ is a metal cation of p valence;
- b is each of either 1 or 2.

According to one further embodiment of the invention, the additive of formula (I) or (II) is such that a is 0, 1 or 2.

According to another embodiment, a is zero so that the phenylene moieties have no other substituents than the sulfonate or carboxylate functions.

According to another embodiment of the invention, the additive salt is benzoate, methylbenzoate, ethylbenzoate, propylbenzoate, benzene sulfonate, benzene disulfonate, p-toluene sulfonate, xylene sulfonate, cumene sulfonate, p-cymene sulfonate and dodecylbenzene sulfonate.

According to another embodiment of the invention, the additive is selected from the group consisting of sodium

or potassium benzoate, sodium or potassium methyl benzoate, sodium or potassium ethylbenzoate, sodium or potassium butylbenzoate, sodium or potassium benzene sulfonate, sodium or potassium benzene-1,3-disulfonate, sodium or potassium p-toluene sulfonate, sodium or potassium xylenesulfonate, sodium or potassium cumene sulfonate, sodium or potassium *para*-cymene sulfonate, sodium or potassium n-butyl benzene sulfonate, sodium or potassium iso-butyl benzene sulfonate, sodium or potassium tert-butyl benezene sulfonate and sodium or potassium dodecylbenzenesulfonate.

The additive is present in the composition of the invention in a quantity of at least 28 wt. %, based on the total weight of the composition.

According to another embodiment of the invention, the composition comprises between about 28 and about 80 wt. % of the additive, for example between about 30 and about 75 wt. % or between about 35 and about 70 wt. %.

According to an embodiment of the present invention, the additive has a melting temperature Tma (°C) of at least 150°C, for example of at least 170°C, at least 180°C, at least 190°C, or at least 200 °C, as for example measured by differential scanning calorimetry (DSC) according to ASTM D3418.

According to another embodiment of the invention, the composition is such that the polymer (P) is semi-cristalline and the additive has a melting temperature Tma (°C) such that

$$\text{Tmp} - 50 \leq \text{Tma} \leq \text{Tmp} + 50 \qquad \text{(a)}$$

wherein Tmp (°C) is the melting point of the semi-crystalline polymer, as for example measured by differential scanning calorimetry (DSC) according to ASTM D3418.

According to this embodiment, the components of the composition are chosen according to their respective melting temperatures (°C) so as to fulfil equation (a). Preferably, the components of the composition are chosen so as to fulfil any of the below equations (b) to (e) :

$$\text{Tmp} - 45 \leq \text{Tma} \leq \text{Tmp} + 45 \qquad \text{(b),}$$

$$\text{Tmp} - 40 \leq \text{Tma} \leq \text{Tmp} + 40 \qquad \text{(c)}$$

$$\text{Tmp} - 35 \leq \text{Tma} \leq \text{Tmp} + 35 \qquad \text{(d)}$$

$$\text{Tmp} - 30 \leq \text{Tma} \leq \text{Tmp} + 30 \qquad \text{(e)}$$

Melting temperature of the components can notably be measured using differential scanning calorimetry according to ASTM D3418.

According to an embodiment of the invention, the polymer composition (C) comprises:

- at least one semi-crystalline polymer (P) selected in the group consisting of PAEK and PPS, and
- at least 28 wt. %, by weight of the polymer composition (C), of at least one additive as described above, for example selected in the group consisting of sodium or potassium benzoate, sodium or potassium methyl benzoate, sodium or potassium ethylbenzoate, sodium or potassium butyl benzoate, sodium or potassium benzene sulfonate, sodium or potassium benzene-1,3-disulfonate, sodium or potassium p-toluene sulfonate, sodium or potassium xylenesulfonate, sodium or potassium cumene sulfonate, sodium or potassium p-cymene sulfonate, sodium or potassium n-butyl benzene sulfonate, sodium or potassium iso-butyl benzene sulfonate, sodium or potassium tert-butyl benezene sulfonate and sodium or potassium dodecylbenzenesulfonate, preferably sodium or potassium benzene sulfonate.

***Optional Components***

In some embodiments, the polymer composition (C) includes titanium dioxide ($TiO_2$). The amount of titanium dioxide preferably ranges from 0 pph to about 25 pph, for example from about 0.1 pph to about 25 pph, for example from about 5 pph to about 20 pph. The amount of titanium dioxide ($TiO_2$) may be at most about 25 pph, preferably at most about 20 pph, preferably at most about 20 pph, preferably at most about 15 pph.

The polymer composition (C) may further optionally comprise additional components such as ultraviolet light stabilizers, heat stabilizers, antioxidants, pigments, processing aids, lubricants, flame retardants, plasticizers and/or

conductivity additive such as carbon black and carbon nanofibrils.

The polymer composition (C) may further comprise water-soluble or dispersible polymer additives for benefit of processing and/or optimizing pore morphology and/or porosity. Examples of such polymers include : sulfo-polyesters, polyvinyl alcohol, polyethylene oxide, polyethylene oxide/propylene oxide copolymers, polyethylene imine, polyethyloxazoline, and polyvinylpyrrolidone, Such polymer additive are chosen to remain stable at the desired processing temperature and remain substantially extractable from the final articles by water.

The polymer composition (C) may further comprise flame retardants such as halogen and halogen free flame retardants.

### *Articles (A) Comprising the Polymer Composition (C) and Applications*

The polymer compositions (C) described herein can be used for the manufacture of a wide variety of formed articles. The term "article" in the present context is thus to be understood broadly. It refers to any type of article of manufacture which can be formed from a polymeric material and covers (a) the intermediate articles (or intermediate shaped articles), which are non-porous, and result directly from the step consisting in shaping the polymer composition of the invention into shaped articles, for example by injection molding, extrusion molding or 3D printing, and (b) the final articles (or final shaped articles), which are porous, and obtained from the intermediate articles which have, for example been immersed into water to dissolve the additive and create the pores. In this context, the additive is said to be water-soluble and/or extractable.

The polymer composition (C) may be used for thermal insulation or acoustic insulation, in variable shapes and sizes.

The polymer article (A) comprising the polymer composition (C) of the present invention may be used as a filter or as a membrane (e.g. microfiltration or ultrafiltration).

The article is preferably a membrane. Indeed, the polymer compositions described herein are very well suited for the production of membranes of this type. The term "membrane" is used herein in its usual meaning, that is to say it refers to a discrete, generally thin, interface that moderates the permeation of chemical species in contact with it. This interface may be molecularly homogeneous, that is, completely uniform in structure (dense membrane), or it may be chemically or physically heterogeneous, for example containing voids, holes or pores of finite dimensions (porous membrane). Membranes can be in the form of a flat sheet or in the form of tubes. Tubular membranes are classified based on their dimensions in tubular membranes having a diameter greater than 3 mm; capillary membranes, having a diameter comprised between 0.5 mm and 3 mm; and hollow fine fibers having a diameter of less than 0.5 mm. Flat sheet membranes are generally preferred when high fluxes are required whereas hollow fibers are particularly advantageous in applications where compact modules with high surface areas are required.

Porous membranes can be characterized by permeability measurements (volume of water which permeates through the membrane under given pressure conditions), porosity (ratio between the volume of voids and the total volume occupied by the membrane), pores features (average pore diameter, smallest pore diameter and largest pore diameter). They can also be characterized by their mechanical properties (tensile properties notably) and chemical resistance (after immersion in various solvents during a given amount of time).

The articles may be used singularly or in bundle arrays and form, for example, filter systems. The articles may be, for example, microfiltration membranes, ultrafiltration membranes or support for reverse osmosis.

These articles can be used in the separation of various materials. The potential utility of such a membrane article depends upon the membrane material, its structure (which depends upon its method of preparation), and the mode in which it is operated. For example, such articles can be used to permeate gases, e.g. oxygen or nitrogen, to separate solutes of suspended matter from solutions, e.g. soluble waste materials from blood (hemodialysis) or to separate dissolved molecules, colloids, and suspended solids from smaller molecules, e.g., in the manufacture of latex or cheese (ultrafiltration).

The inventors have shown that the porous membranes of the present invention present an improved porous structure.

Accordingly, the present invention also concerns the method of using the final shaped articles, for example porous membrane in filtration and purification processes, such as filtration of waste water, preparation of ultrapure water and in medical, pharmaceutical or food applications, including removal of microorganisms, dialyses and protein filtration.

In other words, the present invention concerns the use of the shaped articles for filtering or purifying liquids, such as filtering waste water, for preparing ultrapure water and in medical, pharmaceutical or food applications, including removal of microorganisms, dialyses and protein filtration.

The porosity of the membrane may range from 3 to 90 %, preferably from 5 to 80 % or from 20 to 70 %. For example, the membrane has a porosity of about 50 %, or about 60 %.

The pores may have an average diameter of at least 0.001 $\mu$m, of at least 0.005 $\mu$m, of at least 0.01 $\mu$m, of at least 0.1 $\mu$m, of at least 1 $\mu$m, of at least 10 $\mu$m and of at most 50 $\mu$m.

The porous polymer article, for example membrane, may be used for filtering or purifying fluids, such as liquids or gas.

The porous polymer article, for example membrane, may be used as a separator in batteries, such as Li-ion batteries.

The porous polymer article, for example membrane, may be used for as a diaphragm for electrolizer for the production of dihydrogen.

The porous polymer article, for example porous membrane according to the present invention, may be used for filtrating biologic solution (e.g. bioburden, virus, other large molecules) and/or buffer solutions (e.g. solutions that may contain small amount of solvents like DMSO or other polar aprotic solvents).

According to another embodiment of the present invention, the polymer composition (C) is used as a support material in processes for manufacturing a three-dimensional object with an extrusion-based additive manufacturing system, otherwise known also as fused filament fabrication technique. The polymer composition (C) used as support material in these 3D manufacturing methods is provided under the form of a filament. The filament may have a cylindrical or substantially cylindrical geometry, or may have a non-cylindrical geometry, such as a ribbon filament geometry; further, filament may have a hollow geometry, or may have a core-shell geometry, with the support material of the present invention being used to form either the core or the shell.

***Method of Manufacturing the Polymer Compositions (C), Articles (A) and Porous articles***

The present invention also relates to the method of making the polymer composition (C) as described above, the method comprising melt-mixing the semi-crystalline or amorphous polymer (P) and the additive.

More precisely, the polymer composition (C) can be manufactured by melt-mixing the at least one semi-crystalline or amorphous polymer (P), with at least 28 wt. %, by weight of the polymer composition, of the at least one additive of formula (I):

$$R_a - Ar - X_b \qquad (I)$$

where

- Ar is an aromatic moiety and is selected from the group consisting of substituted or unsubstituted, aromatic monocyclic or polycyclic group having 5 to 18 carbon atoms,
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is $(SO_3^-)$, $(M^{p+})_{1/p}$ or $(COO^-)$, $(M^{p+})_{1/p}$ in which $M^{p+}$ is a metal cation of p valence;
- b is an integer ranging from 1 to 4.

to provide a molten mixture.

The polymer compositions (C) described herein are advantageously provided in the form of pellets, which may be used in injection molding or extrusion processes known in the art.

The polymer composition (C) can be made by methods well known to the person of ordinary skill in the art. For example, such methods include, but are not limited to, melt-mixing processes. Melt-mixing processes are typically carried out by heating the thermoplastic polymer above the melting temperature of the thermoplastic polymer thereby forming a melt of the thermoplastic polymer. Such a process may be carried out by heating the polymers above the melting temperature (Tm) of the semi-crystalline polymer to form a melt of the polymers and/or above the glass transition temperature (Tg) of the amorphous polymer. In some embodiments, the processing temperature ranges from about 180-450°C, preferably from about 220-440°C, from about 260-430°C or from about 280-420°C. Preferably, the processing temperature is at least 15°C, preferably at least 30°C, at least 50°C, at least 80°C or at least 100°C greater than the melting temperature (Tg) of the semi-crystalline polymer (or of the highest polymer Tm in the polymer composition if the composition comprises several semi-crystalline polymers). Preferably, the processing temperature is at least 15°C, preferably at least 30°C or at least 50°C greater than the glass transition temperature (Tg) of the amorphous polymer (or of the highest polymer Tg in the polymer composition if the composition comprises several amorphous polymers). In case of a blend of an amorphous polymer and a semi-crystalline polymer, the melt-mixing process is carried out a temperature which the highest of the Tm or the Tg temperatures.

The additive used in the context of the present invention is preferably in the form of a powder.

The process for the preparation of the composition can be carried out in a melt-mixing apparatus, for which any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the polymer composition the constituting components for forming the composition are fed to the melt-mixing apparatus and melt-mixed in that apparatus. The constituting components may be fed simultaneously as a powder mixture or granule mixer, also known as dry-blend, or may be fed separately.

The order of combining the components during melt-mixing is not particularly limited. In one embodiment, the components can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

The method of manufacturing the polymer composition (C) may comprise if needed several successive steps of melt-mixing or extrusion under different conditions.

The process itself, or each step of the process if relevant, may also comprise a step consisting in a cooling of the molten mixture.

The intermediate non-porous article (e.g. the shaped non-porous membrane or the shaped porous film) and the final porous article (e.g. the porous membrane or the porous film) according to the present invention are made from the polymer composition (C) using any suitable melt-processing method. In particular, they are made by injection molding, extrusion molding or 3D printing.

For this purpose, any standard molding technique can be used; standard techniques including shaping the polymer compositions in a molten/softened form can be advantageously applied, and include notably compression molding, extrusion molding, injection molding, transfer molding and the like. Dies may be used to shape the articles, for example a die having an annular orifice if the article is a hollow fiber membrane.

According to an embodiment of the present invention, the method of forming the polymer articles (intermediate non porous ones or final porous ones) comprises a step consisting in printing layers of a three-dimensional object from the provided polymer composition (C). According to this embodiment, the polymer article is in fact formed with an extrusion-based additive manufacturing system, otherwise known also as fused filament fabrication technique.

According to an embodiment of the present invention, the method of forming the polymer articles (intermediate non porous ones or final porous ones) comprises at least the step consisting in extruding the polymer composition (C) above described.

According to an embodiment of the present invention, the method of forming the porous polymer articles (e.g. porous membrane or porous hollow fiber) comprises additionally the step consisting in contacting the intermediate non porous article with water, for example by immersion into water or in a solution containing water. The water used to dissolve the water-soluble additive can be at a temperature varying for example between room temperature and 95°C. The time period needed to dissolve the polymer is variable. As an example, the time period can vary between 1 second and 2 hours, or from 5 seconds to 1 hour.

According to this embodiment, the additive can be said to be extractable, that-is-to-say able to be substantially extracted from the intermediate product by contact with water, for example immersion into water, the water being possibly heated up to 95°C, for a period of time up to 2 hours. "Substantially" in this context means that at least 80 wt. % of the additive is extracted from the intermediate product, for example at least 85 wt. %, at least 90 wt. % or at least 95 wt. %, so as to obtained the final shaped porous article.

Accordingly the present invention also concerns a method of forming a porous polymer membrane M), comprising:

(i) preparing a polymer composition (C) as described above,
(ii) processing the polymer composition (C) into a membrane, for example extruding the polymer composition (C) into a flat membrane,
(iii) immersing the membrane into water.

The method of forming a porous polymer membrane (M) can comprise one or several optional steps. One optional step consists in stretching the membrane. This optional step can notably take place during step (iii). Another optional step consists in drying the membrane, for example in an oven.

The present disclosure also describes the porous polymer article (e.g. membrane or hollow tube) obtainable by this method.

The porous polymer article may contain up to 20 wt. % of the additive, for example up to 15 wt. % of the additive, up to 10 wt. % of the additive, up to 5 wt. % of the additive or less. According to an embodiment, it contains less than 1 wt. % of the additive.

The articles according to the present invention may be coated or further treated.

Hence, the method, as above detailed, may additionally comprise at least one additional step comprising coating at least one metal onto at least a part of the surface of the said part.

The invention will be herein after illustrated in greater detail in the following section by means of non-limiting examples.

## EXAMPLES

Two working examples and three corresponding comparative examples are provided. All the compositions prepared and evaluated are shown below in Table 3.

### Raw materials

1) PPS polymer : Ryton® QC160N from Solvay Specialty Polymers USA, LLC.
2) PEEK polymer : ketaSpire® KT-880P from Solvay Specialty Polymers USA, LLC. This grade has a melt viscosity in the range 120-180 Pa-s as measured at 400 °C and 1000 1/s according to ASTM D-3835;
3) Sodium benzenesulfonate, RIA International (NaBzS)
4) Sodium acetate, Fisher Scientific (NaAc)

### Melting temperature of the components

Melting temperatures (Tm) of the various components were measured using differential scanning calorimetry according to ASTM D3418 employing a heating and cooling rate of 20 °C/min. Three scans were used for each DSC test: a first heat up to 400 °C, followed by a first cool down to 50 °C, followed by a second heat up to 400 °C. The Tm was determined from the second heat up as the peak temperature on the melting endotherm. The melting temperatures for the four components used in the examples and comparative examples are tabulated in Table 1.

Table 1

| Components | Tm (°C) |
|---|---|
| PPS - Ryton® QC160N | 280 |
| PEEK - KetaSpire® KT-880P | 340 |
| Sodium benzenesulfonate - RIA International | 318 |
| Sodium acetate - Fisher Scientific | 337 |

### Procedure for the preparation of the membranes

Three different polymer compositions were tested :

Membrane #1 : Blend PEEK/ NaBzS 60/40

Membrane #2 : Blend PPS/NaBzS 50/50

Comparative membrane #1 : Blend PPS/NaAc 50/50

**The following process took place for membrane #1 and membrane #2 :**
Selected polymer and additives were pre-dried in oven to eliminate moisture. The combined constituents were added to an Eries Magnetics FT-26 vibratory feeder and fed directly into a Leistritz Mic18GI/30D twin screw co-rotating compounder with screw speed set to 200 rpm and barrel settings adjusted such that the melt temperature was about 320°C for PPS and 380°C for PEEK. The material was then cooled into strands and pelletized.

The pellets were then fed into a gravity hopper mounted to a DSM Xplore MC15 compounder with 15mL barrel capacity and 1" width film die. The barrel temperatures were adjusted such that the melt temperature was > 320°C for PPS, and 380°C for PEEK with screw speed set to force control. Membranes were collected on a DSM Xplore film winder with roll settings (speed, torque) adjusted to target a 100-200 μm thickness.

For comparative membrane #1, the compounding step led to a phase separation of the components and

extruding continuous strands for making pellets was not possible.

**Aqueous extraction of additive after shaping**

The membrane #2 was dried in vacuum and weighed. The membrane was then immersed in an excess of hot water (about 90°C) for 2 hours. The membrane was then dried in vacuum and re-weighed to determine extraction efficiency.

The results can be found in table 2 below :

Table 2

| Initial (g) | Final (g) | % Loss | % Loading | Difference (%) |
|---|---|---|---|---|
| 0.0865 | 0.044 | 49.1 | 50 | 0.9 |

These results show that more than 99 % of the additive has been dissolved during the step of immersion into the hot water, thereby creating pores into the membrane.

**Permeability measurements**

Water flux (J expressed in $1/(m^2xh)$) through each membrane at given pressure, is defined as the volume which permeates per unit area and per unit time. The water flux is calculated by the following equation :

$$J = \frac{V}{A\,\Delta t}$$

wherein :

- J ($1/(m^2xh)$) is the water flux,
- V (1) is the volume of permeate,
- A ($m^2$) is the membrane area, and
- $\Delta t$ (h) is the operation time.

Water flux measurements were conducted at room temperature using a dead-end configuration under a constant nitrogen pressure of 1 bar. Membrane discs with an effective area of 11.3 $cm^2$ were cut from the items stored in water and placed on a metal plate. For each material, flux is the average of at least five different discs.

**Porosity**

Membrane porosity ($\varepsilon m$) was determined according to the gravimetric method. Porosity is defined as the ratio between the volume of voids and the total volume occupied by the membrane. Perfectly dry membrane pieces were weighed and impregnated in isopropylic alcohol (IPA) for 24h; after this time, the excess of the liquid was removed with tissue paper, and membranes weight was measured again. Finally, from the dry and the wet weight of the sample, it is possible to evaluate the porosity of the membrane using the following formula :

$$\varepsilon_m = \frac{(Ww - Wd)/\rho_w}{\frac{(Ww - Wd)}{\rho_w} + \frac{Wd}{\rho_p}} \cdot 100$$

wherein :

- Ww is the weight of the wet membrane,
- Wd is the weight of the dry membrane,
- $\rho_w$ is the IPA density (0.785) and
- $\rho_p$ is the polymer density (1.35 for PPS and 1 .3 for PEEK).

For all membranes types, at least three measurements were performed; then, average values and corresponding standard deviations were calculated.

**Bubble point and pore size determination**

Membranes bubble points, smallest pore size and pore size distribution were determined following ASTM F316 method, using a capillary flow porometer Porolux™ 1000 (Porometer-Belgium). For each test, membranes samples were initially fully wetted using Fluorinert® FC 43 (fluorinated fluid with a surface tension of 16 dyn/cm). Nitrogen (inert gas) was used.

Results are presented in Table 3 below.

Table 3

| Membrane | Water flux | Porosity | Thickness | B.P. | Sm. P* | Av. P** |
|---|---|---|---|---|---|---|
| | ($1/(m^2xh)$) | (%) | ($\mu m$) | ($\mu m$) | ($\mu m$) | ($\mu m$) |
| #1 | 59 | 36 | 165 | 0.220 | 0.156 | 0.180 |
| #2 | 34 | 52 | 99 | 0.163 | 0.029 | 0.042 |
| * Sm. P : smallest pore<br>** Av. P : average pore | | | | | | |

The porous membranes #1 and #2 present good mechanical properties (tensile properties according to ASTM D-638) and good chemical resistance (results not shown).

## Claims

**1.** A polymer composition (C) comprising :

- at least one polymer (P) selected from the group consisting of a poly(aryl ether ketone) (PAEK), a poly(aryl ether sulfone) (PAES), a polyarylene sulfide (PAS), a polyetherimide (PEI), a poly(phenyl ether) (PPE), and a polyphenylene (PP), and
- at least 28 wt. %, based on the total weight of the polymer composition (C), of at least one additive of formula (I):

$$R_a - Ar - X_b \qquad (I)$$

where

- Ar is an aromatic moiety and is selected from the group consisting of substituted or unsubstituted, aromatic monocyclic or polycyclic group having 5 to 18 carbon atoms,
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is $(SO_3^-)$, $(M^{p+})_{1/p}$ or $(COO^-)$, $(M^{p+})_{1/p}$ in which $M^{p+}$ is a metal cation of p valence;
- b is an integer ranging from 1 to 4.

**2.** The polymer composition of claim 1, wherein the additive of formula (I) is such that each of R, identical or different from each other, is selected from the group consisting of a halogen, an hydroxyl and a C1-C3 aliphatic group.

**3.** The polymer composition (C) of any one of claims 1 and 2, wherein Ar in formula (I) is selected from the group consisting of:

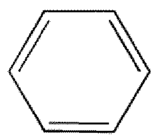

(Ar-A)

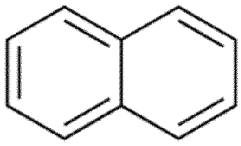

(Ar-B)

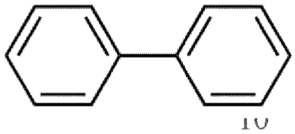

(Ar-C)

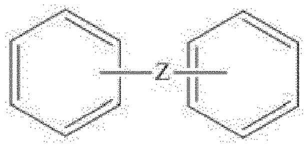

(Ar-D)

wherein Z is a divalent moiety and is selected from the group consisting of $-SO_2-$, -CO- and alkylenes of 1 to 6 carbon atoms.

**4.** The polymer composition (C) of any one of claims 1 to 3, wherein the additive is such that a is 0, 1 or 2.

**5.** The polymer composition (C) of any one of claims 1 to 4, wherein the additive has a melting point Tma (°C) of at least 150°C, as measured by differential scanning calorimetry (DSC) according to ASTM D3418.

**6.** The polymer composition (C) of any one of claims 1 to 5, wherein the polymer (P) is semi-crystalline and the additive has a melting point Tma (°C) such that

$$Tmp - 50 \leq Tma \leq Tmp + 50$$

wherein Tmp (°C) is the melting point of the semi-crystalline polymer, as measured by differential scanning calorimetry (DSC) according to ASTM D3418.

**7.** The polymer composition (C) of any one of claims 1 to 6, wherein the additive is according to formula (II):

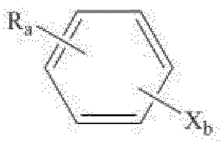

(II)

where

- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is $(SO_3^-)$, $(M^{p+})_{1/p}$ or $(COO^-)$, $(M^{p+})_{1/p}$ in which $M^{p+}$ is a metal cation of p valence;
- b is each of either 1 or 2.

**8.** The polymer composition (C) of any one of claims 1 to 7, wherein the additive salt is selected from the group consisting of benzoate, methylbenzoate, ethylbenzoate, propylbenzoate, benzene sulfonate, benzene disulfonate, p-toluene sulfonate, xylene sulfonate, cumene sulfonate, p-cymene sulfonate and dodecylbenzene sulfonate.

**9.** The polymer composition (C) of any one of claims 1 to 8, comprising between 30 wt. % and 70 wt. % of the additive.

**10.** The polymer composition (C) of any one of claims 1 to 9, in the form of pellets.

**11.** A polymer article (A) comprising the polymer composition (C) of any one of claims 1 to 10.

**12.** A method of forming a porous polymer membrane (M), comprising:

(i) preparing a polymer composition (C) according to any one of claims 1 to 10 by melt mixing the at least one polymer (P) and the least one additive of formula (I),
(ii) processing the polymer composition (C) into a membrane,
(iii) immersing the membrane into water.

**13.** The method of claim 12, wherein the melt-mixing consists in heating the semi-crystalline polymer above its melting temperature (Tm) to form a melt of the polymer.

**14.** The method of claim 13, wherein the processing temperature is at least 15°C greater than the melting temperature (Tm) of the semi-crystalline polymer.

**Patentansprüche**

**1.** Polymerzusammensetzung (C), umfassend:

- mindestens ein Polymer (P), das aus der Gruppe bestehend aus einem Poly(aryletherketon) (PAEK), einem Poly(arylethersulfon) (PAES), einem Polyarylensulfid (PAS), einem Polyetherimid (PEI), einem Poly(phenylether) (PPE) und einem Polyphenylen (PP) ausgewählt ist, und
- mindestens 28 Gew.□%, bezogen auf das Gesamtgewicht der Polymerzusammensetzung (C), von mindestens einem Additiv der Formel (I)

$$R_a\text{-}Ar\text{-}X_b \qquad (I)$$

worin
- Ar für einen aromatischen Rest steht und aus der Gruppe bestehend aus einer substituierten oder unsubstituierten, aromatischen monocyclischen oder polycyclischen Gruppe mit 5 bis 18 Kohlenstoffatomen ausgewählt ist,
- R, gleich oder voneinander verschieden, jeweils aus der Gruppe bestehend aus einem Halogen, einem Hydroxyl, einer aliphatischen C1-C18-Gruppe, einer cycloaliphatischen C1-C18-Gruppe und einem C1-C18-Aromaten ausgewählt ist;
- a für Null oder eine ganze Zahl von 1 bis 5 steht;
- X für $(SO_3^-)$, $(M^{p+})_{1/p}$ oder $(COO^-)$, $(M^{p+})_{1/p}$ steht, worin $M^{p+}$ für ein Metallkation mit einer Wertigkeit von p steht;
- b für eine ganze Zahl von 1 bis 4 steht.

**2.** Polymerzusammensetzung nach Anspruch 1, wobei das Additiv der Formel (I) derart ist, das R, gleich oder voneinander verschieden, jeweils aus der Gruppe bestehend aus einem Halogen, einem Hydroxyl und einer aliphatischen C1-C3-Gruppe ausgewählt ist.

**3.** Polymerzusammensetzung (C) nach einem der Ansprüche 1 und 2, wobei Ar in der Formel (I) aus der Gruppe bestehend aus:

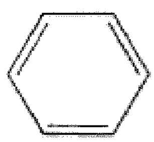

(Ar-A)

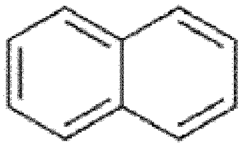

(Ar-B)

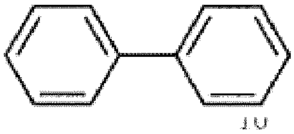

(Ar-C)

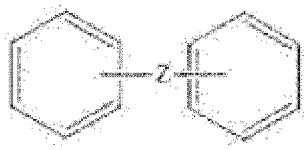

(Ar-D)

ausgewählt ist, wobei Z für einen zweiwertigen Rest steht und aus der Gruppe bestehend aus -$SO_2$-, -CO- und Alkylenen mit 1 bis 6 Kohlenstoffatomen ausgewählt ist.

**4.** Polymerzusammensetzung (C) nach einem der Ansprüche 1 bis 3, wobei das Additiv derart ist, dass a für 0, 1 oder 2 steht.

**5.** Polymerzusammensetzung (C) nach einem der Ansprüche 1 bis 4, wobei das Additiv einen gemäß ASTM D3418 durch dynamische Differenzkalorimetrie (DSC) gemessenen Schmelzpunkt Tma (°C) von mindestens 150 °C aufweist.

**6.** Polymerzusammensetzung (C) nach einem der Ansprüche 1 bis 5, wobei das Polymer (P) halbkristallin ist und das Additiv einen Schmelzpunkt Tma (°C) aufweist, sodass gilt:

$$\mathrm{Tmp} - 50 \leq \mathrm{Tma} \leq \mathrm{Tmp} + 50,$$

wobei Tmp (°C) der gemäß ASTM D3418 durch dynamische Differenzkalorimetrie (DSC) gemessene Schmelzpunkt des halbkristallinen Polymers ist.

**7.** Polymerzusammensetzung (C) nach einem der Ansprüche 1 bis 6, wobei das Additiv der Formel (II) entspricht:

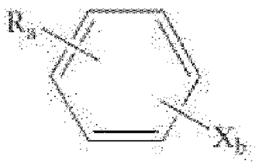

(II)

worin

- R, gleich oder voneinander verschieden, jeweils aus der Gruppe bestehend aus einem Halogen, einem Hydroxyl, einer aliphatischen C1-C18-Gruppe, einer cycloaliphatischen C1-C18-Gruppe und einem C1-C18-Aromaten ausgewählt ist;
- a für Null oder eine ganze Zahl von 1 bis 5 steht;
- X für ($SO_3^-$), $(M^{p+})_{1/p}$ oder ($COO^-$), $(M^{p+})_{1/p}$ steht, worin $M^{p+}$ für ein Metallkation mit einer Wertigkeit von p steht;
- b entweder für 1 oder 2 steht.

**8.** Polymerzusammensetzung (C) nach einem der Ansprüche 1 bis 7, wobei das Additiv-Salz aus der Gruppe bestehend aus Benzoat, Methylbenzoat, Ethylbenzoat, Propylbenzoat, Benzolsulfonat, Benzoldisulfonat, p-Toluolsulfonat, Xylolsulfonat, Cymolsulfonat, p-Cymolsulfonat und Dodecylbenzolsulfonat ausgewählt ist.

**9.** Polymerzusammensetzung (C) nach einem der Ansprüche 1 bis 8, die zwischen 30 Gew.□% und 70 Gew.□% des Additivs umfasst.

**10.** Polymerzusammensetzung (C) nach einem der Ansprüche 1 bis 9 in Form von Pellets.

**11.** Polymergegenstand (A), der die Polymerzusammensetzung (C) nach einem der Ansprüche 1 bis 10 umfasst.

**12.** Verfahren zur Bildung einer porösen Polymermembran (M), umfassend:

(i) Vorbereiten einer Polymerzusammensetzung (C) nach einem der Ansprüche 1 bis 10 durch Schmelzemischen des mindestens einen Polymers (P) und des mindestens einen Additivs der Formel (I),
(ii) Verarbeiten der Polymerzusammensetzung (C) zu einer Membran,
(iii) Eintauchen der Membran in Wasser.

**13.** Verfahren nach Anspruch 12, wobei das Schmelzemischen daraus besteht, dass man das halbkristalline Polymer zur Bildung einer Schmelze des Polymers oberhalb seiner Schmelztemperatur (Tm) erhitzt.

**14.** Verfahren nach Anspruch 13, wobei die Verarbeitungstemperatur mindestens 15 °C oberhalb der Schmelztemperatur (Tm) des halbkristallinen Polymers liegt.

**Revendications**

**1.** Composition (C) de polymère comprenant :

- au moins un polymère (P) choisi dans le groupe constitué par une poly(aryléthercétone) (PAEC), une poly(aryléthersulfone) (PAES), un poly(sulfure d'arylène) (PAS), un polyétherimide (PEI), un poly(éther de phényle) (PPE), et un polyphénylène (PP), et
- au moins 28 % en poids, sur la base du poids total de la composition (C) de polymère, d'au moins un additif de formule (I) :

$$R_a - Ar - X_b \qquad (I)$$

dans laquelle
- Ar est un fragment aromatique et est choisi dans le groupe constitué par un groupe aromatique monocyclique ou polycyclique, substitué ou non substitué, possédant 5 à 18 atomes de carbone,
- chacun parmi R, identiques ou différents les uns des autres, est choisi dans le groupe constitué par un halogène, un hydroxyle, un groupe aliphatique en $C_{1-18}$, un groupe cycloaliphatique en $C_{1-18}$ et un aromatique en $C_{1-18}$ ;
- a est zéro ou un entier de 1 à 5 ;
- X est $(SO_3^-)$, $(M^{p+})_{1/p}$ ou $(COO^-)$, $(M^{p+})_{1/p}$ dans lesquels $M^{p+}$ est un cation métallique de valence p ;
- b est un entier dans la plage de 1 à 4.

**2.** Composition de polymère selon la revendication 1, l'additif de formule (I) étant tel que chacun parmi R, identiques ou différents les uns des autres, est choisi dans le groupe constitué par un halogène, un hydroxyle et un groupe aliphatique en $C_{1-3}$.

**3.** Composition de polymère (C) selon l'une quelconque des revendications 1 et 2, Ar dans la formule (I) étant choisi dans le groupe constitué par :

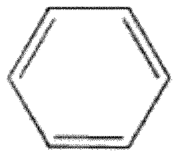

(Ar-A)

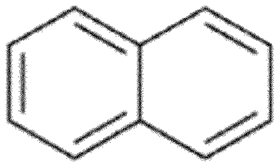

(Ar-B)

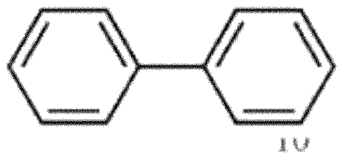

(Ar-C)

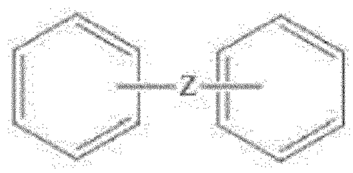

(Ar-D)

Z étant un fragment divalent et étant choisi dans le groupe constitué par $-SO_2-$, -CO- et des alkylènes dotés de 1 à 6 atomes de carbone.

**4.** Composition de polymère (C) selon l'une quelconque des revendications 1 à 3, l'additif étant tel que a est 0, 1 ou 2.

**5.** Composition de polymère (C) selon l'une quelconque des revendications 1 à 4, l'additif possédant un point de fusion Tma (°C) d'au moins 150 °C, tel que mesuré par calorimétrie différentielle à balayage (DSC) selon la norme ASTM D3418.

**6.** Composition de polymère (C) selon l'une quelconque des revendications 1 à 5, le polymère (P) étant semi-cristallin et l'additif possédant un point de fusion Tma (°C) tel que

$$\mathrm{Tmp} - 50 \leq \mathrm{Tma} \leq \mathrm{Tmp} + 50 ,$$

Tmp (°C) étant le point de fusion du polymère semi-cristallin, tel que mesuré par calorimétrie différentielle à balayage (DSC) selon la norme ASTM D3418.

**7.** Composition de polymère (C) selon l'une quelconque des revendications 1 à 6, l'additif étant conforme à la formule (II) :

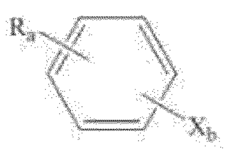

(II)

dans laquelle

- chacun parmi R, identiques ou différents les uns des autres, est choisi dans le groupe constitué par un halogène, un hydroxyle, un groupe aliphatique en $C_{1-18}$, un groupe cycloaliphatique en $C_{1-18}$ et un aromatique en $C_{1-18}$ ;
- a est zéro ou un entier de 1 à 5 ;
- X est $(SO_3^-)$, $(M^{p+})_{1/p}$ ou $(COO^-)$, $(M^{p+})_{1/p}$ dans lesquels $M^{p+}$ est un cation métallique de valence p ;
- b est soit 1, soit 2.

**8.** Composition de polymère (C) selon l'une quelconque des revendications 1 à 7, le sel d'additif étant choisi dans le groupe constitué par un benzoate, un méthylbenzoate, un éthylbenzoate, un propylbenzoate, un benzènesulfonate, un benzènedisulfonate, un p-toluènesulfonate, un xylènesulfonate, un cumènesulfonate, un p-cymènesulfonate et un dodécylbenzènesulfonate.

**9.** Composition de polymère (C) selon l'une quelconque des revendications 1 à 8, comprenant entre 30 % en poids et 70 % en poids de l'additif.

**10.** Composition de polymère (C) selon l'une quelconque des revendications 1 à 9, sous forme de pastilles.

**11.** Article (A) de polymère comprenant la composition de polymère (C) selon l'une quelconque des revendications 1 à 10.

**12.** Procédé de formation d'une membrane (M) poreuse de polymère, comprenant :

(i) la préparation d'une composition (C) de polymère selon l'une quelconque des revendications 1 à 10 par mélange en fusion de l'au moins un polymère (P) et de l'au moins un additif de formule (I),
(ii) le traitement de la composition (C) de polymère pour donner une membrane,
(iii) l'immersion de la membrane dans de l'eau.

**13.** Procédé selon la revendication 12, le mélange en fusion consistant en un chauffage du polymère semi-cristallin au-dessus de sa température de fusion (Tm) pour former une masse fondue du polymère.

**14.** Procédé selon la revendication 13, la température de traitement étant au moins 15 °C plus élevée que la température de fusion (Tm) du polymère semi-cristallin.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5064580 A
- US 6887408 B
- GB 920229 A
- EP 1746125 A
- US 4196070 A
- US 2007232502 A
- US 3956020 A
- US 3852224 A
- GB 980229 A